# EUROPÄISCHE PATENTSCHRIFT

(11) **EP 1 705 473 B1**
(45) Veröffentlichungstag und Bekanntmachung des Hinweises auf die Patenterteilung: **15.12.2010**
(21) Anmeldenummer: 06000542.8
(22) Anmeldetag: 12.01.2006
(51) Int. Cl.: G01M 11/02

(54) **Messeinrichtung zum Messen der Refraktionseigenschaften optischer Linsen**
Measuring device for measuring the refraction properties of optical lenses
Dispositif de mesure destiné à la mesure des propriétés de réfraction de lentilles optiques

(30) Priorität: 23.03.2005 DE 202005004934 U; 21.06.2005 DE 202005009847 U
(43) Veröffentlichungstag der Anmeldung: 27.09.2006
(73) Patentinhaber: Oculus Optikgeräte GmbH, 35582 Wetzlar (DE)
(72) Erfinder: Köst, Gert, 30171 Hannover (DE)
(74) Vertreter: von den Steinen, Axel

(56) Entgegenhaltungen:
- EP-A- 1 136 806
- EP-A- 1 248 093

## Beschreibung

Die Erfindung betrifft eine Messeinrichtung zum Messen der Refraktionseigenschaften optischer Linsen, insbesondere von Brillengläsern, nach dem Oberbegriff des Anspruchs 1.

Derartige, auch unter dem Begriff Scheitelbrechwertmesser bekannte Vorrichtung sind aus dem Stand der Technik bekannt. Gattungsgemäß ist bei diesen Scheitelbrechwertmessern ein Messlichtraster zur Erzeugung von mehreren Lichtbündeln vorhanden. Dieses Messlichtraster kann beispielsweise von vier Leuchtdioden gebildet sein. Die vom Messlichtraster erzeugten Lichtbündel werden von der zu untersuchenden Linse durch Lichtbrechung abgelenkt, wobei die abgelenkten Lichtbündel auf einen Messlichtdetektor projiziert und dort elektronisch erfasst werden. Abhängig von den Refraktionseigenschaften der Linse wird das Messlichtraster in charakteristischer Weise auf dem Messlichtdetektor projiziert, so dass aus den Messsignalen des Messlichtdetektors die Refraktionseigenschaften der Linse bestimmt werden können. Diese Bestimmung der Refraktionseigenschaften erfolgt bei gattungsgemäßen Messeinrichtungen in einer Auswerteeinrichtung, in der beispielsweise durch geeignete Bildverarbeitung das mit dem Messlichtdetektor aufgenommene Beleuchtungsmuster ausgewertet wird.

Nachteilig bei den bekannten Scheitelbrechwertmessern ist es, dass die Refraktionseigenschaften der Linse immer nur an einer Stelle untersucht werden können. Die zu untersuchende Stelle der Linse muss dazu beispielsweise derart in der Messeinrichtung platziert werden, dass sie sich auf der Hauptmessachse der Messeinrichtung befindet. In diesem spezi ellen Bereich können dann die Refraktionseigenschaften der Linse bestimmt werden. Bei einer regelmäßigen Zylinderlinse reicht die Bestimmung der Refraktionseigenschaften in einem Punkt auch aus, da sich die Refraktionseigenschaften über die verschiedenen Bereiche der Linse nicht ändern.

Problematisch wird jedoch die Vermessung von unregelmäßigen Linsen, beispielsweise Gleitsichtgläsern, da sich bei diesen unregelmäßigen Linsen die Refraktionseigenschaften abhängig von den verschiedenen Bereichen der Linsen ändert. Bei Vermessung derartiger unregelmäßiger Linsen ist es bisher notwendig, dass das Bedienpersonal die Linse von Hand zwischen den einzelnen Messvorgängen in der Messeinrichtung verschiebt und auf diese Weise sukzessive Messwerte für die verschiedenen Bereich der Linse ermittelt werden. Diese Art der Messung ist außerordentlich umständlich, ungenau und kostenintensiv.

Ausgehend von diesem Stand der Technik ist es deshalb Aufgabe der vorliegenden Erfindung eine neue Messeinrichtung zum Messen der Refraktionseigenschaften optischer Linsen vorzuschlagen.

Diese Aufgabe wird durch eine Messeinrichtung nach der Lehre des Anspruchs 1 gelöst.

Vorteilhafte Ausführungsformen der Erfindung sind Gegenstand der Unteransprüche.

Die erfindungsgemäße Messeinrichtung beruht auf dem Grundgedanken, dass zwischen der zu untersuchenden Linse und dem Messlichtdetektor eine Blende mit mehreren Lichtdurchtrittsöffnungen angeordnet ist, um die Auswertegenauigkeit der Messergebnisse des Messlichtdetektors zu erhöhen. Die Lichtdurchtrittsöffnungen in der Blende bewirken, dass die verschiedenen in der Linse durch Lichtbrechung abgelenkten Lichtbündel wiederum mehrfach entlang getrennter Strahlengänge auf den Messlichtdetektor projiziert werden. Dies führt im Ergebnis dazu, dass bei Betrieb einer einzelnen Lichtquelle des Messlichtrasters entsprechend der Anzahl der Lichtdurchtrittsöffnungen mehrere Lichtpunkte auf den Messlichtdetektor projiziert werden, wobei jeder einzelne Lichtpunkt in der Auswerteeinnchtung im Hinblick auf die Refraktionseigenschaften ausgewertet werden kann.

Weiterhin wird die Auswertung der Lichtmuster auf dem Messlichtdetektor erheblich vereinfacht, wenn die Lichtdurchtrittsöffnungen der Blende gemäß einem kartesischen oder polarem Raster angeordnet sind. Als besonders geeignet hat sich dabei ein kartesisches 6x6-Raster aus insgesamt 36 Lichtdurchtrittsöffnungen erwiesen.

Weiterhin sollte eine Lichtdurchtrittsi5ffnüng der Blende einen anderen Querschnitt, insbesondere einen größeren Querschnitt als die anderen Lichtdurchtrittsöffnungen aufweisen, um auf diese Weise bei der Bildauswertung der Messsignale des Messlichtdetektors als Indexmarkierung im Beleuchtungsmuster dienen zu können.

Die Lichtdurchtrittsöffnungen in der Blende sollten vorzugsweise einen kreisrunden Querschnitt aufweisen, da die dadurch erzeugten kreisrunden Lichtprojektionen auf dem Messlichtdetektor besonders genau und einfach ausgewertet werden können.

In welcher Weise die Lichtdurchtrittsöffnungen konstruktiv in der Blende ausgebildet sind, ist grundsätzlich beliebig. Nach einer bevorzugten Ausführungsform wird eine intransparente Blende verwendet, wobei die Lichtdurchtrittsöffnungen von Ausnehmungen in der intransparenten Blende gebildet werden. Diese Ausnehmungen können beispielsweise durch Bohren mit einem Laserstrahl sehr fein hergestellt werden.

Alternativ dazu kann auch eine transparente Blende verwendet werden, wobei die Lichtdurchtrittsöffnungen von Ausnehmungen in einer intransparenten Beschichtung auf der transparenten Blende gebildet werden. Beispielsweise ist es sehr einfach und kostengünstig möglich, ein entsprechendes Druckbild auf einer transparenten Blende, beispielsweise aus Glas, aufzubringen.

Besonders vorteilhaft ist es, wenn in der Messeinrichtung ein Zusatzmesssystem zur elektronischen Vermessung der Geometrie der vorderen Linsenoberfläche und/oder der hinteren Linsenoberfläche vorgesehen ist. Dies bedeutet mit anderen Worten, dass mit dem Zusatxrnesssystem der erfindungsgemäßen Messeinrichtung die Topographie der zu untersuchenden Linse bestimmbar ist. Im Ergebnis stellt das Zusatzmesssystezn als Messergebnis die Geomctriedaten der Linsenoberfläche zur Verfügung, wobei diese Geometriedaten bei der Bestimmung der Refraktionseigenschaften der Linse in der Auswerteeinrichtung berücksichtigt werden. Dadurch gelingt es, dass durch Einblendung geeigneter Messlichtraster die Refraktionseigenschaften der Linse in allen Bereichen bestimmt werden können, ohne dass die Linse dazu in der Messeinrichtung bewegt werden muss. Die definierte Anordnung eines Messpunktes der Linse in der Messeinrichtung wird dadurch ersetzt, dass durch Einsatz des Zusatzmesssystems die Topographie der gesamten Linse bestimmt und bei der Ermittlung der Refraktionseigenschaften in den verschiedenen Bereichen der Linse berücksichtigt wird.

Soweit die zu untersuchenden Linsen in einer definierten Lage in der Messeinrichtung angeordnet werden, kann diese definierte relative Lage zwischen Linse und Messeinrichtung als vorgegebene Randbedingung der Messungen berücksichtigt werden. Vielfach ist jedoch die definierte Anordnung der Linse in der Messcinrichtung schwierig oder unmöglich, so dass durch die daraus resultierenden Lageabweichungen Messfehler entstehen. Es ist deshalb besonders vorteilhaft, wenn mit dem Zusatzmesssystem auch die relative Lage der Linse in der Messeinrichtung bestimmbar ist. Auch dieses zusätzliche Messergebnis wird dann bei der Bestimmung der Refraktionseigenschaften der Linse in der Auswerteeinrichtung berücksichtigt.

Auf welche Weise das Zusatzmesssystem ausgebildet ist, um die Geometrie bzw. die Topographie der Linse und/oder die relative Lage zwischen Linse und Messeinrichtung zu bestimmen, ist grundsätzlich beliebig. Nach einer bevorzugten Ausführungsform wird zur Messung der Linsengeometrie bzw. der Linsenlage ein Reflektionslichtmesssystem eingesetzt. Dieses Reflektionslichtmesssystem umfasst zumindest eine Reflektionsmesslichtquelle und einen Reflektionsmesslichtdetektor. Das von der Reflektionsmesslichtquelle erzeugte Lichtbündel wird an der vorderen Linsenoberfläche und/oder an der hinteren Linsenoberfläche zumindest teilweise reflektiert, wobei der reflektierte Anteil des Lichtbündels auf den Reflektionsmesslichtdetektor projiziert und dort elektronisch erfasst wird. Die mit dem Reflektionsmesslichtdetektor erfassten Messsignale werden in der Auswerteeinrichtung ausgewertet und daraus die Linsenoberfläche bzw. die Lage der Linse in der Messeinrichtung bestimmt.

Zusätzlich zur Bestimmung der Linsentopographie bzw. der Linsenlage kann aus den Messsignalen des Reflektionsmesslichtdetektors auch das Maß der Entspiegelung der Linsenoberfläche bestimmt werden, um Aussagen über die Vergütung der Linse zu treffen.

Weiterhin ist es durch Auswertung der verschiedenen Messsignale des Reflektionsmesslichtdetektors bzw. des Messlichtdetektors dann möglich die Brechzahl n des Wertstoffs zu bestimmen, aus dem die Linse gefertigt ist.

Weiterhin ist es besonders vorteilhaft, wenn zumindest zwei Lichtquellen des Messlichtrasters bzw. zumindest zwei Reflektionsmesslichtquellen Lichtbündel mit unterschiedlicher Lichtfärbung erzeugen. Diese unterschiedliche Lichtfarbe ermöglicht es, dass aus den Messsignalen des Reflektionsmesslichtdetektors bzw. den Messsignalen des Messlichtdetektors die spektrale Durchlässigkeit des Werkstoffs, aus dem die zu untersuchende Linse hergestellt ist, als Materialkennwert bestimmt wird.

Grundsätzlich können für das Messlichtraster und das Reflektionsmesslicht unterschiedliche Lichtquellen eingesetzt werden. Besonders kostengünstig kann die erfindungsgemäße Messeinrichtung jedoch hergestellt werden, wenn die Lichtquellen des Messlichtrasters zugleich auch als Reflektionsmesslichtquellen des Zusatzmesssystems dienen. Auf diese Weise kann auf zusätzliche Reflektionsmesslichtquellcn verzichtet werden, so dass das Zusatzmesssystem allein durch Einbau eines zusätzlichen Reflektionsmesslichtdetektors realisiert werden kann.

An welcher Stelle des Gerätes der Reflektionsmesslichtdetektor eingebaut ist, ist grundsätzlich beliebig. Nach einer bevorzugten Ausführungsform ist der lteflektionsmesslichtdetektor in der Mitte des Messlichtrasters angeordnet.

Weiterhin ist es besonders vorteilhaft, wenn der Reflektionsmesslichtdetektor dem Messlichtdetektor gegenüberliegend auf der optischen Hauptachse der Messeinrichtung angeordnet ist, so dass sich insgesamt ein zur Hauptachse der Messeinrichtung achsensymmetrisches Messsystem ergibt.

Welche Art von Lichtquellen zur Bildung des Messlichtrasters bzw. des Reflektionsmesslichtrasters verwendet werden, ist grundsätzlich beliebig. Beispielsweise können dazu Leuchtmittel in Kombination mit entsprechend ausgebildeten Spalt- oder Punktblenden eingesetzt werden. Besonders kostengünstig und einfach lässt sich die Messeinrichtung realisieren, wenn punktförmige Lichtquellen, insbesondere Leuchtdioden zur Erzeugung des Messlichtes bzw. Reflektionsmesslichts eingesetzt werden. Die Leuchtdioden sollten dabei vorzugsweise weißes Licht abstrahlen.

Die Auswertung der Messsignale des Reflektionsmesslichtdetektors bzw. des Messlichtdctektors wird erheblich vereinfacht, wenn die Reflektionsmesslichtquellen bzw. die Lichtquellen des Messlichtrasters entsprechend einem kartesischen oder polarem Raster angeordnet sind. Besonders bevorzugt ist es dabei, wenn zur Bildung des Messlichtrasters bzw. Reflektionsmesslichtrasters 64 Lichtquellen in einem polaren Raster aus 16 Strahlen und 4 konzentrischen Kreisen angeordnet sind.

Der Reflektionsmesslichtdetektor und/oder Messlichtdetektor ist vorzugsweise in der Art eines Videosensors ausgebildet. Insbesondere können dazu CCD-Chips oder CMOS-Chips eingesetzt werden.

Zur Lagerung der Linse in der Messeinrichtung sollte bevorzugt eine Mehrpunktlagerung mit vorzugsweise drei Auflagerpunkten vorgesehen sein. Der Abstand zwischen den Auflagerpunkten sollte dabei vorzugsweise verstellt werden können, um unterschiedlich große Linsen optimal in der Messeinrichtung lagern zu können.

In welcher Weise die Auswerteergebnisse der Auswerteeinheit dargestellt werden, ist grundsätzlich beliebig. Bevorzugt sollte eine Darstellungseinheit, beispielsweise ein Bildschirm oder ein Drucker, mit der Auswerteeinheit verbunden werden. Die Auswerteergebnisse, insbesondere die Geometrie der vorderen oder hinteren Linsenoberfläche bzw. die Refraktionseigenschaften der Linse können dann in zweidimensionaler Form graphisch an der Darstellungseinheit angezeigt werden.

Eine Ausführungsform der Erfindung ist in den Zeichnungen schematisch dargestellt und wird nachfolgend beispielhaft erläutert.

Es zeigen:
- Fig. 1: eine Messeinrichtung zum Messen der Refraktionseigenschaften optischer Linsen in perspektivischer Ansicht;
- **Fig. 2**: die Messeinrichtung gemäß **Fig. 1** in seitlicher Ansicht;
- **Fig. 3**: das Funktionsprinzip der Messeinrichtung gemäß **Fig. 1** in schematisierte seitlicher Ansicht;
- **Fig. 4**: den Aufbau des Messlichtrasters der Messeinrichtung gemäß **Fig. 1** in Ansicht von oben;
- **Fig. 5**: den Aufbau der vor dem Messlichtdetektor angeordneten Blende der Messeinrichtung gemäß **Fig. 1****.**

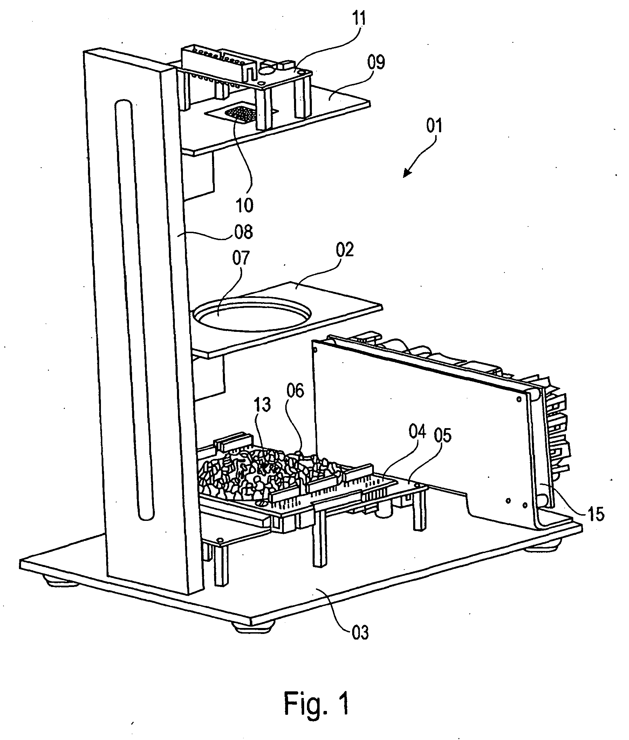

In Fig. 1 ist eine Messeinrichtung 01 zum Messen der Refraktionseigenschaften optischer Linsen in perspektivischer Ansicht dargestellt. Zur Lagerung einer Linse 07 in der Messeinrichtung 01 während der Messung ist ein Auflager 02 mit entsprechend großer Durchgangsöffnung vorgesehen. Auf dieses Auflager 02 wird die Linse 07 während der Messung von oben aufgelegt.

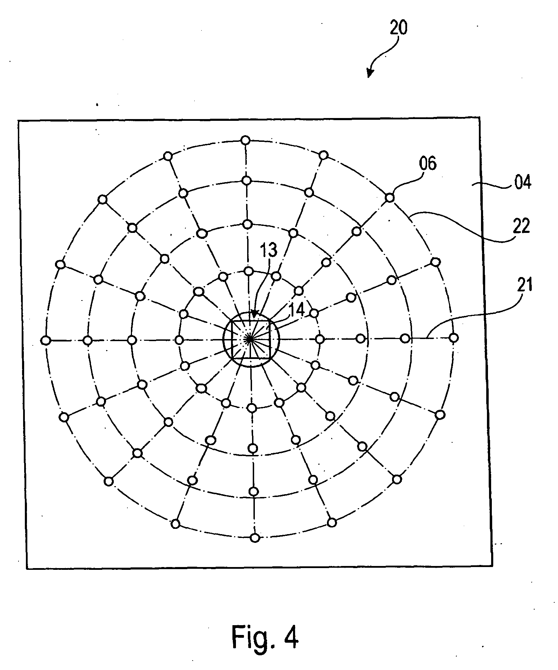

Auf einer Grundplatte 03 sind mit Befestigungsbolzen zwei Elektronikplatinen 04 und 05 befestigt Die Elektronikplatine 04 trägt eine Vielzahl von Leuchtdioden 06, die weißes Licht abstrahlen und gemäß einem polarem Raster auf den Kreuzungspunkten von 16 Strahlen mit 4 konzentrischen Kreisen angeordnet sind. Der Aufbau des Rasters zur Anordnung der Leuchtdioden 06 ist aus Fig. 4 ersichtlich.

Weiterhin trägt die Elektronikplatine 04 die elektronischen Steuerungsbauteile zur Ansteuerung der Leuchtdioden 06. Die Leuchtdioden 06 bilden ein Messlichtraster, mit dessen Hilfe die Refraktionseigenschaften der Linse 07 bestimmt werden kann. Zugleich dienen die Leuchtdioden 06 auch als Reflektionsmesslichtquellen, mit deren Hilfe die Geometrie der zu untersuchenden Linse 07 und deren relative Lage in der Messeinrichtung 01 bestimmt werden kann.

An einem Ständer 08, der auch das Auflager 02 trägt, ist darüber hinaus eine Trägerplatte 09 höhenverschiebbar befestigt. In einer Ausnehmung der Trägerplatte 09 ist eine Blende 10 angeordnet, die 36 in einem Raster angeordnete Lichtdurchtrittsöffnungen 23 und eine Index-Lichtdurchtrittsöffnung 24 aufweist. Oberhalb der Blende 10 ist eine weitere Elektronikplatine 11 auf der Trägerplatte 09 befestigt, auf deren unteren zur Blende 10 gerichteten Seite ein Messlichtdetektor 12 angeordnet ist, der beispielsweise in der Art eines CMOS-Chips oder CCD-Chips ausgebildet ist. Auf der Elektronikplatine 05 ist unterhalb einer Ausnehmung 13 in der Elektronikplatine 04 ein Reflektionsmesslichtdetektor 14 angeordnet, auf dem an der Linse 07 reflektiertes Licht erfasst werden kann.

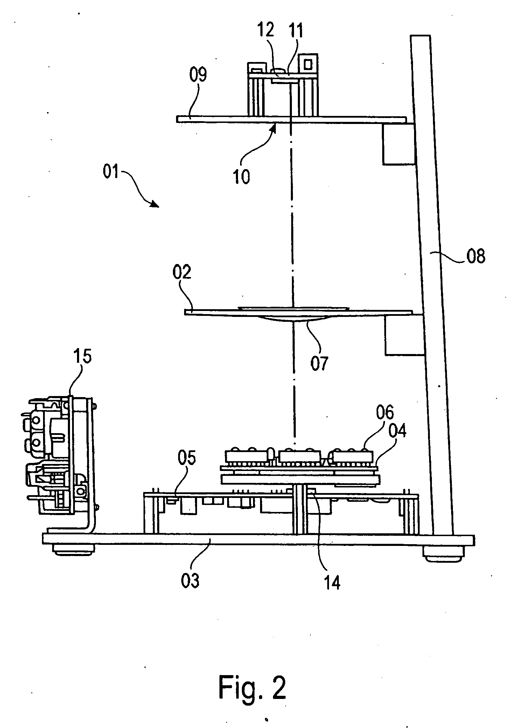

Die Elektronikplatinen 04, 05 und 11 sind mit in **Fig. 1** und **Fig. 2** nicht dargestellten Kabeln mit einer weiteren Elektronikplatine 15 verbunden, auf der die als Auswerteeinrichtung dienende Mikroelektronik und die zum Betrieb der Messeinrichtung 01 notwendige Leistungselektronik bestückt ist.

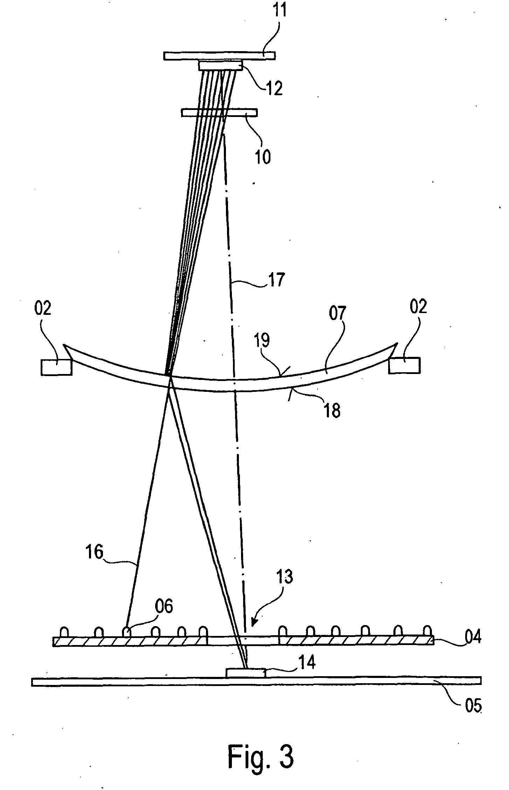

Das Messprinzip der Messeinrichtung 01 soll nachfolgend anhand der Prinzipskizze in **Fig. 3** näher erläutert werden. Zur Bestimmung der Refraktionseigenschaften der Linse 07 wird diese zunächst auf das Auflager 02 aufgelegt. Statt des in Fig. 1 dargestellten starren Auflagers 02 kann auch ein Dreipunktauflager Verwendung finden, bei dem die Auflagerpunkte in ihrem Abstand zueinander verstellbar sind. Bei Durchführung der Messung an der Linse 07 werden nacheinander jeweils einzeln die Leuchtdioden 06 eingeschaltet und geben ein weißfarbiges Lichtbündel 16 ab. Dieses Lichtbündel 16 wird aufgrund der optischen Eigenschaften der Linse 07 durch Lichtbrechung abgelenkt und auf der Rückseite der Linse 07 mit einem bestimmten Brechungswinkel, der die Refraktionseigenschaften der Linse 07 an der entsprechenden Stelle repräsentiert, in Richtung des Mcsslichtdctektors 12 abgestrahlt.

Da vor dem Messlichtdetektor 12 die Blende 10 mit einem Raster aus 37 Lichtdurchtrittsöffnungen angeordnet ist, wird das durch Lichtbrechung abgelenkte Lichtbündel 16 entlang von 37 verschiedenen Strahlengängen auf den Messlichtdetektor 12 projiziert und bildet dort ein für die Refraktionseigenschaften der Linse 07 im Lichtdurchtrittspunkt charakteristisches Lichtguuktraster. Dies bedeutet mit anderen Worten, dass das bei Einschalten einer Leuchtdiode 06 abgestrahlte Lichtbündel 16 nach Durchtritt durch die Linse 07 und die Blende 10 ein Lichtpunktraster aus 37 Lichtpunkten auf dem Messlichtdetektor 12 bildet. Dieses Lichtpunktraster wird vom Messlichtdetektor 12 elektronisch erfasst und in der Auswerteelektronik mit dem Lichtpunktraster verglichen, dass sich bei Betrieb der entsprechenden Leuchtdiode 06 ohne Zwischenlegung einer Linse 07 ergibt. Aus der Differenz zwischen den beiden Lichtpunktrastern können dann die Refraktionseigenschaften der Linse 07 an der entsprechenden Stelle bestimmt werden.

Wie aus Fig. 3 ersichtlich, durchtritt das Lichtbündel 16 der Leuchtdiode 06 die Linse 07 an einer Stelle, die nicht am Durchtrittspunkt der optischen Hauptachse 17 der Messeinrichtung 01 liegt. Um die relative Lage des Durchtrittspunktes und die Geometrie der vorderen Linsenfläche 18 und der hinteren Linsenfläche 19 bestimmen zu können, dient der Reflektionsmesslichtdetektor 14. Mit dem Reflektionsmesslichtdetektor 14 werden die am Lichtdurchtrittspunkt an den Oberflächen 18 und 19 reflektierten Lichtanteile des Lichtbündels 16 aufgefangen und entsprechen in der Auswerteelektronik ausgewertet.

Die oben dargestellte Messung des Durchlichts bzw. Reflektionslichts mit dem Messlichtdetektor 12 und dem Reflektionsmesslichtdetektor 14 wird nacheinander durch Einschalten der insgesamt 64 Leuchtdioden 06 durchgeführt. Zur Ermittlung der Refraktionseigenschaften der Linse 07 stehen dann in der Auswerteelektronik insgesamt 64 Lichtpunktraster mit jeweils 37 Lichtpunkten zur Verfügung. Aus den Messwerten des Reflektionsmesslichtdetektors 14 wird zugleich die Geometrie der Linse 07 und deren Lage in der Messeinrichtung 01 bestimmt, wobei diese Auswerteergebnisse des Zusatzmesssystems bei der Ermittlung der Refraktionseigenschaften berücksichtigt werden. Im Ergebnis muss die Linse 07 somit zur vollständigen Bestimmung ihrer an den verschiedenen Orten variierenden Refraktionseigenschaften in der Messeinrichtung 01 nicht mehr bewegt werden.

Der schematische Aufbau des Messlichtrasters 20, dessen Leuchtdioden 06 zugleich als Reflektionsmesslichtquellen dienen, ist aus Fig. 4 ersichtlich. Die Leuchtdioden 06 sind zur Bildung des Messlichtrasters 20 auf einem polarem Raster angeordnet, das si9ch aus den Kreuzungspunkten von 16 gleichmäßig verteilten Rasterstrahlen 21 mit 4 konzentrisch angeordneten Rasterkreisen 22 ergibt. In der Mitte des Messlichtrasters 20 ist die Ausnehmung 13 vorgesehen, unterhalb der der Reflektionsmesslichtdetektor 14 angeordnet ist.

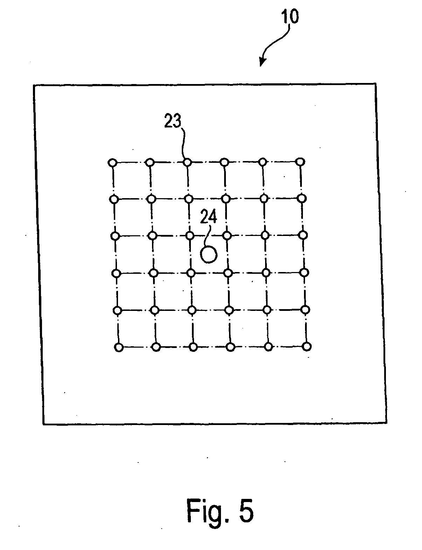

In Fig. 5 ist der Aufbau der Blende 10 mit den Lichtdurchtrittsöffnungen 23 und 24 in Ansicht von oben dargestellt. Die Lichtdurchtrittsöffnungen 23 weisen einen kleinen, kreisrunden Querschnitt auf und sind dabei an den 36 Kreuzungspunkten eines kartesischen 6x6-Rasters angeordnet. In der Mitte dieses kartesischen Rasters ist die Lichtdurchtrittsöffnung 24 vorgesehen, die einen größeren Querschnitt aufweist und damit als Indexmarkierung bei der Projektion auf den Messlichtdetektor 12 dient. Zur Herstellung der Lichtdurchtrittsöffnungen 23 und 24 wird ein Metallplättchen unter Bildung von Ausnehmungen mit einem Laserstrahl bearbeitet. Alternativ dazu kann auf einem Glasplättchen auch eine intransparente Druckbildschicht angebracht werden, die an den entsprechenden Stellen Ausnehmungen aufweist.

## Patentansprüche

1. Messeinrichtung (01) zum Messen der Refraktionseigenschaften optischer Linsen (07), insbesondere Brillengläsern, mit einem Messlichtdetektor (12), auf den abgelenkte Lichtbündel (16) projiziert und dort elektronisch erfasst werden, und mit einer Auswerteeinrichtung, in der aus den Messsignalen des Messlichtdetektors (12) die Refraktionseigenschaften der Linse (07) bestimmt werden, wobei zwischen der zu untersuchenden Linse (07) und dem Messlichtdetektor (12) eine Blende (10) mit mehreren Lichtdurchtrittsöffnungen (23, 24) angeordnet ist,
**dadurch gekennzeichnet,**
**dass** die Messeinrichtung (01) ein Messlichtraster (20) aufweist, wobei das Messlichtraster (20) zur Erzeugung mehrerer Lichtbündel (16) dient, die von der Linse (07) durch Lichtbrechung abgelenkt werden, und wobei die vom Messlichtraster (20) erzeugten und an der Linse (07) durch Lichtbrechung abgelenkten Lichtbündel (16) durch die verschiedenen Lichtdurchtrittsöffnungen (23, 24) der Blende (10) entlang getrennter Strahlengänge auf den Messlichtdetektor (12) projiziert werden.

2. Messeinrichtung nach Anspruch 1,
**dadurch gekennzeichnet,**
**dass** die Lichtdurchtrittsöffnungen (23, 24) der Blende (10) einen kreisrunden Querschnitt aufweisen.

3. Messeinrichtung nach Anspruch 1 oder 2,
**dadurch gekennzeichnet,**
**dass** die Lichtdurchtrittsöffnungen (23) der Blende (10) in einem kartesischem oder polarem Raster angeordnet sind.

4. Messeinrichtung nach Anspruch 3,
**dadurch gekennzeichnet,**
**dass** 36 Lichtdurchtrittsöffnungen (23) in einem kartesischem 6x6-Raster angeordnet sind.

5. Messeinrichtung nach einem der Ansprüche 1 bis 4,
**dadurch gekennzeichnet,**
**dass** eine Lichtdurchtrittsöffnungen (24) der Blende (10) als Indexmarkierung dient und einen anderen Querschnitt, insbesondere einen größeren Querschnitt, als alle anderen Lichtdurchtrittsöffnungen (23) aufweist.

6. Messeinrichtung nach einem der Ansprüche 1 bis 5,
**dadurch gekennzeichnet,**
**dass** die Lichtdurchtrittsöffnungen (23, 24) von Ausnehmungen in einer intransparenten Blende gebildet werden.

7. Messeinrichtung nach einem der Ansprüche 1 bis 6,
**dadurch gekennzeichnet,**
**dass** die Lichtdurchtrittsöffnungen von Ausnehmungen in einer intransparenten Beschichtung, insbesondere einem Druckbild, auf einer transparenten Blende gebildet werden.

8. Messeinrichtung nach einem der Ansprüche 1 bis 7,
**dadurch gekennzeichnet,**
**dass** in der Einrichtung ein Zusatzmesssystem (14, 20) zur elektronischen Vermessung der Geometrie der vorderen Linsenoberfläche (18) und/oder der hinteren Linsenoberfläche (19) vorgesehen ist, wobei das Messergebnis des Zusatzmesssystems (14) bei der Bestimmung der Refraktionseigenschaften der Linse (07) in der Auswerteeinrichtung einberechnet wird.

9. Messeinrichtung nach Anspruch 8,
**dadurch gekennzeichnet,**
**dass** mit dem Zusatzmesssystem (06, 14, 20) die Vermessung der relativen Lage der Linse (07) in der Messeinrichtung (01) möglich ist, wobei dieses zusätzliche Messergebnis des Zusatzmesssystems (14) bei der Bestimmung der Refraktionseigenschaften der Linse (07) in der Auswerteeinrichtung einberechnet wird.

10. Messeinrichtung nach Anspruch 8 oder 9,
**dadurch gekennzeichnet,**
**dass** das Zusatzmesssystem (06, 14, 20) eine Reflektionsmesslichtquelle (06, 20) und einen Reflektionsmesslichtdetcktor (14) umfasst, wobei die von der Reflektionsmesslichtquelle (06, 20) erzeugten Lichtbündel (16) an der vorderen Linsenoberfläche (18) und/oder an der hinteren Linsenoberfläche (19) zumindest teilweise reflektiert werden, und wobei die reflektierten Lichtbündel auf den Reflektionsmesslichtdetektor (14) projiziert und dort elektronisch erfasst werden, und wobei in der Auswerteeinrichtung aus den Messsignalen des Reflektionsmesslichtdetektors (14) die Geometrie der vorderen Linsenoberfläche (18) und/oder der hinteren Linsenoberfläche (19) und/oder die relative Lage der Linse (07) in der Messeinrichtung (01) bestimmt werden.

11. Messeinrichtung nach Anspruch 10,
**dadurch gekennzeichnet,**
**dass** in der Auswerteeinrichtung aus den Messsignalen des Reflektionsmesslichtdetektors (14) das Maß der Entspiegelung der Linsenoberflächen (18, 19) bestimmt wird.

12. Messeinrichtung nach Anspruch 10 oder 11,
**dadurch gekennzeichnet,**
**dass** in der Auswerteeinrichtung aus den Messsignalen des Reflektionsmesslichtdetektors (14) und/oder den Messsignalen des Messlichtdetektors (12) die Brechzahl n als Materialkennwert des die zu untersuchenden Linse (07) bildenden Werkstoffes bestimmt wird.

13. Messeinrichtung nach einem der Ansprüche 10 bis 13,
**dadurch gekennzeichnet,**
**dass** die Lichtquellen (06) des Messlichtrasters (20) der Messeinrichtung auch als Reflektionsmesslichtquellen des Zusatzmesssystems dienen.

14. Messeinrichtung nach einem der Ansprüche 10 bis 13,
**dadurch gekennzeichnet,**
**dass** der Reflektionsmesslichtdetektor (14) in der Mitte des Messlichtrasters (20) angeordnet ist.

15. Messeinrichtung nach einem der Ansprüche 10 bis 14,
**dadurch gekennzeichnet,**
**dass** der Reflektionsmesslichtdetektor (14) dem Messlichtdetektor (12) gegenüberliegend auf der optischen Hauptachse (17) der Messeinrichtung (01) angeordnet ist.

16. Messeinrichtung nach einem der Ansprüche 10 bis 15,
**dadurch gekennzeichnet,**
**dass** mehrere im wesentlichen punktförmige Lichtquellen (06) als Reflektionsmesslichtquellen und/oder als Lichtquellen im Messlichtraster (20) dienen.

17. Messeinrichtung nach Anspruch 16,
**dadurch gekennzeichnet,**
**dass** die punktförmigen Lichtquellen von Leuchtdioden (06), insbesondere weißes Licht abstrahlende Leuchtdioden, gebildet werden.

18. Messeinrichtung nach einem der Ansprüche 10 bis 17,
**dadurch gekennzeichnet,**
**dass** zumindest zwei Lichtquellen (06) des Messlichtrasters (20) und/oder zumindest zwei Reflektionsmesslichtquellen Lichtbündel unterschiedlicher Lichtfarbe erzeugen, wobei in der Auswerteeinrichtung aus den Messsignalen des Reflektionsmesslichtdetektors (14) und/oder den Messsignalen des Messlichtdetektors (12) die spektrale Durchlässigkeit als Materialkennwert des die zu untersuchenden Linse (07) bildenden Werkstoffes bestimmt wird.

19. Messeinrichtung nach einem der Ansprüche 10 bis 18,
**dadurch gekennzeichnet,**
**dass** die Reflektionsmesslichtquellen und/oder die Lichtquellen (06) im Messlichtraster (20) in einem kartesischem oder polarem Raster angeordnet sind.

20. Messeinrichtung nach Anspruch 19,
**dadurch gekennzeichnet,**
**dass** 64 Lichtquellen (06) in einem polarem Raster an den Schnittpunkten von 16 Rasterstrahlen (21) und vier konzentrischen Rasterkreisen (22) angeordnet sind.

21. Messeinrichtung nach einem der Ansprüche 10 bis 20,
**dadurch gekennzeichnet,**
**dass** der Reflektionsmesslichtdetektor (14) und/oder der Messlichtdetektor (12) in der Art eines Videosensors, insbesondere in der Art eines CCD-Chips oder CMOS-Chips, ausgebildet ist.

22. Messeinrichtung nach einem der Ansprüche 1 bis 21,
**dadurch gekennzeichnet,**
**dass** zur Lagerung der Linse in der Messeinrichtung ein Mehrpunktlager mit insbesondere drei Auflagerpunkten vorgesehen ist.

23. Messeinrichtung nach Anspruch 22,
**dadurch gekennzeichnet,**
**dass** der Abstand zwischen den Auflagerpunkten des Mehrpunktlagers verstellbar ist.

24. Messeinrichtung nach einem der Ansprüche 1 bis 23,
**dadurch gekennzeichnet,**
**dass** die Auswerteeinheit mit einer Darstellungseinheit, insbesondere einem Bildschirm und/oder einem Drucker, verbunden ist, wobei die Auswerteergebnisse der Auswerteeinheit, insbesondere die Geometrie der Linsenoberflächen und/oder die Refraktionseigenschaften der Linse an der Darstellungseinheit graphisch darstellbar sind.

## Claims

1. Measurement device (01) for measuring the refraction characteristics of optical lenses (07), in particular spectacle lenses, having a measurement light detector (12), onto which deflected light beams (16) are projected and there electronically detected, and an analysis device in which the refraction characteristics of the lens (07) are determined from the measurement signals of the measurement light detector (12), a screen (10) with multiple openings (23, 24) for the passage of light being arranged between the lens (07) under investigation and the measurement light detector (12),
**characterized in that**
the measurement device (01) has a measurement light array (20), said measurement light array (20) being used to generate multiple light beams (16), which are deflected by the lens (07) by refraction of light, and wherein the light beams (16) generated by the measurement light array (20) and deflected at the lens (07) by refraction of light are projected through the different openings (23, 24) in the screen (10) for the passage of light along separate beam paths on to the measurement light detector (12).

2. The measurement device according to Claim 1,
**characterized in that**
the openings (23, 24) in the screen (10) for the passage of light have a circular cross-section.

3. The measurement device according to Claim 1 or 2,
**characterized in that**
the openings (23, 24) in the screen (10) for the passage of light are arranged in a Cartesian or polar array.

4. The measurement device according to Claim 3,
**characterized in that**
36 openings (23) for the passage of light are arranged in a Cartesian 6x6 array.

5. The measurement device according to one of Claims 1 to 4,
**characterized in that**
one opening (24) in the screen (10) for the passage of light is used as an index mark and has a different cross-section, in particular a larger cross-section, than all other openings (23) for the passage of light.

6. The measurement device according to one of Claims 1 to 5,
**characterized in that**
the openings (23, 24) for the passage of light are formed by recesses in a non-transparent screen.

7. The measurement device according to one of Claims 1 to 6,
**characterized in that**
the openings for the passage of light are formed by recesses in a non-transparent coating, in particular a printed image, on a transparent screen.

8. The measurement device according to one of Claims 1 to 7,
**characterized in that**
an additional measurement system (14, 20) for the electronic measurement of the geometry of the front lens surface (18) and/or of the rear lens surface (19) is provided in the device, wherein the measurement result from the additional measurement system (14) is used in the analysis device in the calculation to determine the refraction characteristics of the lens (07).

9. The measurement device according to Claim 8,
**characterized in that**
the measurement of the relative position of the lens (07) in the measurement device (01) is possible with the additional measurement system (06, 14, 20), wherein this additional measurement result from the additional measurement system (14) is used in the analysis device in the calculation to determine the refraction characteristics of the lens (07).

10. The measurement device according to Claim 8 or 9,
**characterized in that**
the additional measurement system (06, 14, 20) comprises a reflection measurement light source (06, 20) and a reflection measurement light detector (14), wherein the light beams (16) generated by the reflection measurement light source (06, 20) are at least partially reflected at the front lens surface (18) and/or at the rear lens surface (19), and wherein the reflected light beams are projected onto the reflection measurement light detector (14) and there electronically detected, and wherein the geometry of the front lens surface (18) and/or the rear lens surface (19) and/or the relative position of the lens (07) in the measurement device (01) are determined in the analysis device from the measurement signals of the reflection measurement light detector (14).

11. The measurement device according to Claim 10,
**characterized in that**
from the measurement signals of the reflection measurement light detector (14) the size of the antireflection coating of the lens surfaces (8, 19) is determined in the analysis device.

12. The measurement device according to Claim 10 or 11,
**characterized in that**
from the measurement signals of the reflection measurement light detector (14) and/or the measurement signals of the measurement light detector (12) the refractive index n is determined in the analysis device, as a material characteristic of the material forming the lens (07) under examination.

13. The measurement device according to one of Claims 10 to 13,
**characterized in that**
the light sources (06) of the measurement light array (20) of the measurement device serve as reflection measurement light sources of the additional measurement system.

14. The measurement device according to one of Claims 10 to 13,
**characterized in that**
the reflection measurement light detector (14) is arranged in the centre of the measurement light array (20).

15. The measurement device according to one of Claims 10 to 14,
**characterized in that**
the reflection measurement light detector (14) is arranged to lie opposite the measurement light detector (12) on the optical main axis (17) of the measurement device (01).

16. The measurement device according to one of Claims 10 to 15,
**characterized in that**
multiple essentially punctiform light sources (06) are used as reflection measurement light sources and/or as light sources in the measurement light array (20).

17. The measurement device according to Claim 16,
**characterized in that**,
the punctiform light sources are formed by light-emitting diodes (06), in particular white light-emitting diodes.

18. The measurement device according to one of Claims 10 to 17,
**characterized in that**
at least two light sources (06) of the measurement light array (20) and/or at least two reflection measurement light sources generate light beams of different coloured light, wherein from the measurement signals of the reflection measurement light detector (14) and/or the measurement signals of the measurement light detector (12) the spectral transmissivity is determined in the analysis device as a material characteristic of the material forming the lens (07) under examination.

19. The measurement device according to one of Claims 10 to 18,
**characterized in that**
the reflection measurement light sources and/or the light sources (06) in the measurement light array (20) are arranged in a Cartesian or polar array.

20. The measurement device according to Claim 19,
**characterized in that**
64 light sources (06) are arranged in a polar array at the intersection points of 16 array beams (21) and four concentric array circles (22).

21. The measurement device according to one of Claims 10 to 20,
**characterized in that**
the reflection measurement light detector (14) and/or the measurement light detector (12) is constructed in the manner of a video sensor, in particular in the manner of a CCD chip or CMOS chip.

22. The measurement device according to one of Claims 1 to 21,
**characterized in that**
in order to mount the lens in the measurement device a multi-point mounting is provided, in particular having three support points.

23. The measurement device according to Claim 22, **characterized in that**
the distance between the support points of the multi-point mounting is adjustable.

24. The measurement device according to one of Claims 1 to 23,
**characterized in that**
the analysis unit is connected to a display unit, in particular a display screen and/or a printer, wherein the analysis results from the analysis unit, in particular the geometry of the lens surfaces and/or the refraction characteristics of the lens, can be displayed graphically on the display unit.

## Revendications

1. Dispositif de mesure (01) pour mesurer les propriétés de réfraction de lentilles (07) optiques, en particulier des verres de lunettes, comprenant un détecteur de lumière de mesure (12), sur lequel des faisceaux de lumière (16) déviés sont projetés et enregistrés ici de façon électronique, et un dispositif d'analyse, dans lequel les propriétés de réfraction de la lentille (07) sont déterminées à partir des signaux de mesure du détecteur de lumière de mesure (12), un diaphragme (10) avec plusieurs ouvertures de passage de lumière (23, 24) étant disposé entre la lentille (07) à étudier et le détecteur de lumière de mesure (12),
**caractérisé en ce que**
le dispositif de mesure (01) présente un réseau de lumière de mesure (20), le réseau de lumière de mesure (20) servant à générer plusieurs faisceaux de lumière (16), qui sont déviés par la lentille (07) par réfraction, et les faisceaux de lumière (16) générés par le réseau de lumière de mesure (20) et déviés sur la lentille (07) par réfraction sont projetés par les différentes ouvertures de passage de lumière (23, 24) du diaphragme (10) le long de trajectoires de rayons séparés sur le détecteur de lumière de mesure (12).

2. Dispositif de mesure selon la revendication 1,
**caractérisé en ce que**
les ouvertures de passage de lumière (23, 24) du diaphragme (10) présentent une section circulaire.

3. Dispositif de mesure selon la revendication 1 ou 2,
**caractérisé en ce que**
les ouvertures de passage de lumière (23) du diaphragme (10) sont disposées dans un réseau cartésien ou polaire.

4. Dispositif de mesure selon la revendication 3,
**caractérisé en ce que**
36 ouvertures de passage de lumière (23) sont disposées dans un réseau 6x6 cartésien.

5. Dispositif de mesure selon l'une quelconque des revendications 1 à 4,
**caractérisé en ce**
**qu'**une ouverture de passage de lumière (24) du diaphragme (10) sert de marquage d'index et présente une autre section, en particulier une section plus grande que toutes les autres ouvertures de passage de lumière (23).

6. Dispositif de mesure selon l'une quelconque des revendications 1 à 5,
**caractérisé en ce que**
les ouvertures de passage de lumière (23, 24) sont formées par des évidements pratiquées dans un diaphragme non transparent.

7. Dispositif de mesure selon l'une quelconque des revendications 1 à 6,
**caractérisé en ce que**
les ouvertures de passage de lumière sont formées par des évidements pratiquées dans un revêtement non transparent, en particulier une image imprimée, sur un diaphragme transparent.

8. Dispositif de mesure selon l'une quelconque des revendications 1 à 7,
**caractérisé en ce que**
un système de mesure supplémentaire (14, 20) est prévu dans le dispositif pour le mesurage électronique de la géométrie de la surface de lentille (18) avant et/ou de la surface de lentille (19) arrière, le résultat de la mesure du système de mesure supplémentaire (14) étant intégré lors de la détermination des propriétés de réfraction de la lentille (07) dans le dispositif d'analyse.

9. Dispositif de mesure selon la revendication 8,
**caractérisé en ce que**
le mesurage de la position relative de la lentille (07) dans le dispositif de mesure (01) est possible avec le système de mesure supplémentaire (06, 14, 20), ce résultat de mesure supplémentaire du système de mesure supplémentaire (14) étant intégré dans le calcul lors de la destination des propriétés de réfraction de la lentille (07) dans le dispositif d'analyse.

10. Dispositif selon la revendication 8 ou 9,
**caractérisé en ce que**
le système de mesure supplémentaire (06, 14, 20) comporte une source de lumière de mesure de réflexion (06, 20) et un détecteur de lumière de mesure de réflexion (14), les faisceaux de lumière (16) générés par la source de lumière de mesure de réflexion (06, 20) étant réfléchis au moins partiellement sur la surface de lentille (18) avant et/ou sur la surface de lentille (19) arrière, et les faisceaux de lumière réfléchis étant projetés sur le détecteur de lumière de mesure de réflexion (14) et étant enregistrés ici de façon électronique, et la géométrie de la surface de lentille (18) avant et/ou de la surface de lentille (19) arrière et/ou la position relative de la lentille (07) dans le dispositif de mesure (01) étant déterminées dans le dispositif d'analyse à partir des signaux de mesure du détecteur de lumière de mesure de réflexion (14).

11. Dispositif de mesure selon la revendication 10,
**caractérisé en ce que**
la proportion du traitement antireflet des surfaces de lentille (18, 19) est déterminée dans le dispositif d'analyse à partir des signaux de mesure du détecteur de lumière de mesure de réflexion (14).

12. Dispositif de mesure selon la revendication 10 ou 11,
**caractérisé en ce que**
l'indice de réfraction n en tant que paramètre de matériau du matériau formant la lentille (07) à étudier étant déterminé dans le dispositif d'analyse à partir des signaux de mesure du détecteur de lumière de mesure de réflexion (14) et/ou des signaux de mesure du détecteur de lumière de mesure (12).

13. Dispositif de mesure selon l'une quelconque des revendications 10 à 13,
**caractérisé en ce que**
les sources de lumière (06) du réseau de lumière de mesure (20) du dispositif de mesure servent de sources de lumière de mesure de réflexion du système de mesure supplémentaire.

14. Dispositif de mesure selon l'une quelconque des revendications 10 à 13,
**caractérisé en ce que**
le détecteur de lumière de mesure de réflexion (14) est disposé au centre du réseau de lumière de mesure (20).

15. Dispositif de mesure selon l'une quelconque des revendications 10 à 14,
**caractérisé en ce que**
le détecteur de lumière de mesure de réflexion (14) est disposé en face du détecteur de lumière de mesure (12) sur l'axe principal (17) optique du dispositif de mesure (01).

16. Dispositif de mesure selon l'une quelconque des revendications 10 à 15,
**caractérisé en ce que**
plusieurs sources lumineuses (06) sensiblement ponctuelles servent de sources de lumière de mesure de réflexion et/ou de sources de lumière dans le réseau de lumière de mesure (20).

17. Dispositif selon la revendication 16,
**caractérisé en ce que**
les sources lumineuses ponctuelles sont formées de diodes électroluminescentes (06), en particulier de diodes électroluminescentes diffusant de la lumière blanche.

18. Dispositif de mesure selon l'une quelconque des revendications 10 à 17,
**caractérisé en ce que**
au moins deux sources lumineuses (06) du réseau de lumière de mesure (20) et/ou au moins deux sources de lumière de mesure de réflexion génèrent des faisceaux de lumière de différentes couleurs de lumière, la perméabilité spectrale en tant que paramètre de matériau du matériau formant la lentille (07) à étudier étant déterminée dans le dispositif d'analyse à partir des signaux de mesure du détecteur de lumière de mesure de réflexion (14) et/ou des signaux de mesure du détecteur de lumière de mesure (12).

19. Dispositif de mesure selon l'une quelconque des revendications 10 à 18,
**caractérisé en ce que**
les sources de lumière de mesure de réflexion et/ou les sources de lumière (06) dans le réseau de lumière de mesure (20) sont disposées dans un réseau cartésien ou polaire.

20. Dispositif de mesure selon la revendication 19, **caractérisé en ce que**
64 sources de lumière (06) sont disposées dans un réseau polaire aux points d'intersection de 16 rayons de réseau (21) et quatre cercles de réseau (22) concentriques.

21. Dispositif de mesure selon l'une quelconque des revendications 10 à 20,
**caractérisé en ce que**
le détecteur de lumière de mesure de réflexion (14) et/ou le détecteur de lumière de mesure (12) sont conçus à la façon d'un capteur vidéo, en particulier à la façon d'une puce CCD ou d'une puce CMOS.

22. Dispositif de mesure selon l'une quelconque des revendications 1 à 21,
**caractérisé en ce que**
un palier multipoints avec en particulier trois points de support est prévu pour la fixation de la lentille dans le dispositif de mesure.

23. Dispositif de mesure selon la revendication 22,
**caractérisé en ce que**
la distance entre les points de support du palier multipoints est réglable.

24. Dispositif de mesure selon l'une quelconque des revendications 1 à 23,
**caractérisé en ce que**
l'unité d'analyse est reliée à une unité de représentation, en particulier un écran et/ou une imprimante, les résultats d'analyse de l'unité d'analyse, en particulier la géométrie des surfaces de lentille et/ou les propriétés de réfraction de la lentille pouvant être représentés graphiquement sur l'unité de représentation.
